# EUROPEAN PATENT SPECIFICATION

(11) **EP 1 458 244 B1**
(45) Date of publication and mention of the grant of the patent: **21.02.2007**
(21) Application number: 02787787.7
(22) Date of filing: 25.11.2002
(51) Int. Cl.: A23D 7/02

(54) **KIT FOR PREPARING A SPREAD**
KIT ZUR HERSTELLUNG EINES BROTAUFSTRICHS
ENSEMBLE DE PREPARATION D'UN PRODUIT A TARTINER

(30) Priority: 21.12.2001 EP 01310852
(43) Date of publication of application: 22.09.2004
(73) Proprietor: UNILEVER N.V., 3013 AL Rotterdam (NL); UNILEVER PLC, London EC4P 4BQ (GB)
(72) Inventor: ECKHARDT, Goetz, Unilever R & D Vlaardingen, 3133 AT Vlaardingen (NL); FINLAYSON, Roger Morley, Unilever R&D VLaardingen, 3133 AT Vlaardingen (NL); FOSTER, Timothy, John, Sharnbrook, Bedfordshire MK44 1LQ (GB); PELAN, Edward, G., Unilever R & D Vlaardingen, 3133 AT Vlaardingen (NL)
(74) Representative: Joppe, Hermina Laura Petronella
(86) International application number: PCT/EP2002/013170
(87) International publication number: WO 2003/053150

(56) References cited:
- EP-A- 0 853 889
- WO-A-98/33399
- US-A- 4 160 850

## Description

### Field of the invention

The present invention relates to a kit suitable for preparing a spreadable oil and water comprising edible emulsion.

### Background to the invention

Instant kitchen products are well known. Examples are instant dressings and instant soup. These generally are based on the principle of either dilution of a stock composition (soup) or dissolving a powder in (hot) water (soup and dressing). For other kitchen products such as spreadable oil and water containing compositions such instant products are not widely known. Spreads which are generally suitable for use in frying, baking, spreading (on bread, toast or the like) are well known for decades. These products are generally offered to a consumer in the form of a final product in a tub or wrapper.

EP-A-0 853 889 discloses a kit for preparing an acidified food product.

In US-A-4160850, an attempt is made to provide an instant product. Hence this document provides a shelf-stable mix suitable for consumer preparation of a spreadable butter substitute. However, the products provided therein require a set of actions which take long and require accurate weighing of the ingredients. Furthermore the compositions of US 4,160,850 require the addition of other ingredients which may not always be available in a household. Also the sale of pouches only could be unattractive for a consumer who may not immediately realise that further ingredients that she should buy separately are to be included to come to a final product.

A further disadvantage of requiring a consumer to add many ingredients from his own stock is that the quality of these stock ingredients may be less reliable in terms of microbial preservation and taste defects.

The beverages industry has tried to solve this by providing a combination of all ingredients in a separate pack. CN-A-1226501 discloses a beverage bottle having a sealed cup full of specific additives. Before drinking the small cup is broken and the substances stored therein are dissolved and mixed with water.

Accordingly the need exists for a kit suitable for preparing a spreadable oil and water containing emulsion.

More specifically, there is a need for an improved kit for preparing a spreadable oil and water containing emulsion. This need especially exists for an easy to handle kit, providing good quality ingredients and a set of instructions such that the consumer can reliably prepare a spreadable oil and water containing emulsion.

### Summary of the invention

The present invention provides a kit that meets these objectives.

The invention relates to a kit for the instant preparation of a spreadable water and oil comprising emulsion, said kit comprising at least two items selected from
(a) a measuring device,
(b) a water containing composition
(c) an oil containing composition
wherein item (b) and (c) are provided in separate packaging units and wherein the kit further comprises an emulsifier composition (d) and preferably a cold hydrating viscosifying agent (e).

### Detailed description of the invention

The terms fat and oil are used interchangeably.

The kit is suitable for preparing an edible emulsion.

The emulsion prepared by using the claimed kit is spreadable. In the context of the invention, spreadable is defined by a combination of G' and Stevens value wherein the Stevens value, determined by the method illustrated in the examples, is preferably at least 50 g at 5 °C, more preferred from 50 to 800 g at 5 °C and G', determined by the method illustrated in the examples, preferably ranges from 300 to 5000 Pa at 5 °C under the measuring conditions specified in the examples.
More preferred the Stevens value at 5 °C is from 50 to 500 g when measured with a so called mayonnaise grid to a penetration depth of 20 mm or, for harder products of from 100 to 500 g when measured to a penetration depth of 10 mm with a cylindrical stainless steel probe of 7mm diameter. The mayonnnaise grid is also described in WO-A-01-/41586.
Examples of known spreadable products include fresh cheese and dairy based spreads. Water continuous spreadable products are often milk based and optionally acidified as disclosed for example in WO-A-97/04660, DE-A-37101052, DE-A-3822082, EP-A-938,848 and EP-A-603,890.

An aqueous phase is defined as a water continuous composition optionally comprising further ingredients e.g. dispersed or dissolved therein.
An oil phase is defined as an oil continuous composition optionally comprising further ingredients e.g. dispersed or dissolved therein.

In the context of the invention a container is a packaging unit which is preferably closable. A container may be rigid or flexible. Rigid containers are preferably made from a plastic or glass. Flexible containers are also referred to as a pouch. A flexible container is preferably made from a plastic such as low density polypropylene. Preferably the containers are reclosable with a cap.

The kit is suitable for the preparation of a spreadable oil in water emulsion. This implies that preferably the kit provides the material and optionally also the instructions for a consumer how the ingredients of the kit are to be combined to make the final emulsion. Optionally the consumer is instructed to add further common kitchen ingredients such as oil and water to the components of the kit for the preparation of the final emulsion.

The kit is meant for daily use in a household and hence is preferably clean, easy to handle and made such that it can be easily stored, preferably out of the refrigerator.

The kit is composed such that the emulsion is prepared instantly.

For the purpose of the invention instant is defined as less than 10 minutes, preferably less than 5 minutes, more preferred less than 3 minutes, even more preferred from 20 seconds to 2 minutes.

The emulsion that is obtained by usage of the kit preferably comprises from 20 to 80 wt%, more preferred from 30 to 55 wt% fat.

The kit comprises an emulsifier composition (d) and preferably a cold hydrating viscosifying agent (e). These ingredients may be present in a separate packaging unit, but may also be included in the oil containing composition or in the water containing composition.

The emulsifier is preferably selected from the group comprising lecithin, caseinate, caseinate replacer, polyglycerol polyricinoleate, monoglycerides, distilled monoglycerides, citric acid esters of monoglycerides, di-acetyl acetic acid esters of monoglycerides, lactic acid esters of monoglyceride, diglycerides, polyglycerol esters of fatty acids or sorbitan esters of fatty acids and polyoxyethylene compositions such as sorbitan monopolyoxyethylene (Tween).
In a more preferred embodiment the emulsifier is lecithin, a polyoxyethylene composition such as sorbitan monopolyoxyethylene (Tween), caseinate, a caseinate replacer or a combination thereof.

The amount of emulsifier is preferably from 0.05 to 8, preferably from 0.1 to 5 wt% on total oil weight.

An example of a suitable caseinate replacer is the combination of an emulsifier such as sorbitan monopolyoxyethylene (Tween) and a gum such as guar gum.

Alternatively the aqueous phase comprises a combination of gelling pectin and surface active pectin or a combination of gelling alginate and surface active alginate or a combination thereof.
These combinations may replace caseinate or can be added in addition to (part of) the caseinate. Without wishing to be bound by any theory it is believed that the surface active counterpart of the alginate or pectin plays a role in emulsion stabilisation by its presence at the oil/water interface. The gelling counterpart of alginate or pectin is believed to thicken the aqueous phase thereby also contributing to aqueous phase stability and reduced syneresis.
Said combination is especially preferred in case the final emulsion is an oil in water emulsion. The oil droplets will then be embedded in an aqueous gel, immobilising said oil droplets and hence preventing coalescence of the oil droplets.

The terms surface active pectin/alginate and gelling pectin/alginate are believed to be well known to a person skilled in the art.
A suitable surface active pectin is acetylated pectin. A suitable surface active alginate is propyleneglycolalginate (PGA). An example of gelling pectin is low methoxy pectin and an example of gelling alginate is manucol^{tm} or manugel^{tm}.

The amount of surface active pectin or alginate is preferably from 0.05 to 2 wt% on water containing composition, preferably from 0.2 to 0.8 wt% on water containing composition.

The amount of gelling pectin or alginate is preferably from 0.01 to 2 wt% on water containing composition, preferably from 0.2 to 0.8 wt% on water containing composition.

The gelation of gelling pectin or alginate is preferably mediated with divalent cations, preferably Ca²⁺. The introduction of calcium is controlled so that hydration of the polymer and emulsification of oil droplets precedes gel formation. This may for example be achieved by using the pH dependence of the solubility of calcium salts eg. CaCO₃, CaSO₄ and mixtures thereof.

The cold hydrating viscosifying agents are defined as those ingredients which will hydrate when added to water which is at a temperature of at most 60°C. The hydration leads to an increase of viscosity of the water in which the ingredient is dispersed. A test to determine suitable cold hydrating viscosifying (CHV) ingredients or systems is described in the examples. This test is further referred to as "RVA method". Those agents or combinations thereof that show a final viscosity after 500 seconds of more than 1700 cP, or that show a final viscosity of from 300 to 600 cP in combination with a rate of hydration defined by the difference of viscosity between time is 0 seconds and time is 100 seconds of more than 1200 cP/minute, are considered suitable cold hydrating viscosifying agents.
Suitable agents can also be found by microscopic examination of water swollen compositions. Suitable compositions for spread-like textures show intact, swollen particles, whereas ones showing irregular, "broken" structures tend to be less suitable.

Compositions that are intended for preparation of a final emulsion that is spreadable preferably comprise a cold hydrating viscosifying agent that gives a final viscosity of at least 1700 cP, preferably 1700 to 4000 cP in combination with a rate of hydration of at least 600, preferably 600 to 4000 cP/minute determined by the RVA- method according to the examples.

Preferably the cold hydrating viscosifying agent is selected from the group comprising cold swelling starch, inulin and gums which give final viscosities greater than 400cP with hydration rates greater than 1500cP/min in the RVA method, or combinations thereof.

Especially preferred cold hydrating viscosifying agents are the so called "modified waxy maize starches".

The following guidelines provide guidance for selection of the cold hydrating viscosifying agent.
For the preparation of spreadable final oil in water emulsions, the use of a cold swelling starch as cold hydrating viscosifying agent is highly preferred. Suitable cold swelling starches are preferably selected from the group comprising Passelli EZ 1911^{tm}, Ultratex A^{tm}, Ultratex 1^{tm}, Ultratex 2^{tm}, Ultratex 2000^{tm}, Ultratex 3^{tm}, Ultratex 4^{tm}, Instant Clearjel^{tm}, Ultrasperse M^{tm}, Ultrasperse 5^{tm}, and Ultrasperse A^{tm} and combinations thereof. The mentioned examples are available from National Starch.
Remyline AP^{tm} ex Remy Industries is another suitable cold swelling starch.

Modified potato starch such as Paselli SA 2^{tm} from Avebe was found to be less preferred because compositions wherein this ingredient is used tend to be very soft. Cook -up starches such as Colflo 67^{tm} are less preferred as these will only provide structure after cooking for a considerable amount of time which is often undesired in the process of preparing a final emulsion.

The kit may comprise citric cell wall material in addition to a cold hydrating viscosifying agent or as an alternative thereto. Examples of suitable material are Herbacel AQ Plus citrus fibre^{tm} obtainable from Herbafood ingredients GmbH, or other fibre from e.g. orange peels. Preferably the cell wall material is homogenised before use.

### The water containing composition

Water containing composition is a composition comprising at least water and optionally further ingredients.

Examples of suitable water containing compositions include but are not limited to:
- aqueous phase without any additives
- aqueous phase with emulsifier and or thickener or ingredient showing this multiple functionality
- aqueous phase comprising a dispersed fat phase

In a preferred embodiment the water containing composition is an aqueous phase comprising an emulsifier which is caseinate or caseinate replacer.
The amount of caseinate is preferably from 0.2 to 5 wt%, more preferred from 0.7 to 2 wt% on water containing composition.

The caseinate or replacer thereof may be added to the water containing composition before packaging and alternatively a composition already containing caseinate, such as milk, is provided in the kit.

According to an alternative embodiment the water containing composition comprises a polysaccharide. Preferably the polysaccharide is selected from the group comprising guar, xanthan, locust bean gum, pecthin, lambda carrageenan, fenugreek, konjac, xyloglucan, carboxymethylcellulose, methylcellulose or a combination thereof.

The amount of polysaccharide is preferably from 0.2 to 6 wt%, more preferred from 0.5 to 3 wt%, most preferred from 1 to 2 wt% on total water composition.

In a preferred embodiment the water containing composition is selected from (fruit) juice, buttermilk, whey, milk, cream, tea, coffee, and water.

### The oil containing composition

Oil containing composition is a composition comprising at least oil and optionally further ingredients.

The oil containing composition preferably comprises a coldhydrating viscosifying agent.
The amount of cold hydrating viscosifying agent on oil is preferably from 3 to 30 wt%, more preferred from 5 to 20 wt%.

Furthermore the oil composition preferably comprises salt. The preferred salt is sodium chloride. The amount of salt added varies with the taste direction of consumers but is generally between 0.5 and 10 wt%, more preferred from 1 to 4 wt% on total oil containing composition.

Optionally the oil composition comprises an acidulant. Suitable acidulants are for example lactic acid, citric acid, sorbic acid. The acidulant may be added for reasons of preservation. Furthermore the addition of acidulant is preferred if the water containing composition comprises caseinate. The mixing of caseinate and acidulant on mixing of the water containing composition and the oil containing composition will lead to coagulation of casein, thus providing structure to the final emulsion.

Suitable oils or fat blends are preferably selected from the group comprising sunflower oil, soybean oil, rapeseed oil, cottonseed oil, olive oil, corn oil, groundnut oil, or low melting butterfat fractions and/or combinations thereof. These fats may be partially hydrogenated or could f.e. be inter-esterified mixtures of hardened fats with liquid oils. Preferably the oil containing composition is pourable.
Most preferred the oil containing composition is based on sunflower oil or olive oil.

In a highly preferred embodiment, the oil containing composition is essentially free of water.

### Measuring device

The measuring device serves to help a consumer use the correct dose of ingredients to prepare a final spreadable composition. Preferably the measuring device is rigid.

The measuring device is preferably provided with a clear volume scale with pointers to the consumer how much of a specific ingredient should be added to obtain a spreadable product.

### The kit

The kit comprises at least two elements of (a) a measuring device, (b) a water containing composition and (c) an oil containing composition.

The elements of the kit are packaged as one total unit to facilitate consumer recognition. The "one unit" concept may serve to remind a consumer that the multiple products contained in the kit are preferably used in combination.

Optionally the "one unit" concept is emphasised by graphics, brand name, colour coding or shape of the individual units contained in the kit. In a preferred embodiment the separate units of the kit have a shape which fits together tightly to reduce space and to emphasise the connection between the contents of the separate units.

The volume of the water containing composition and the oil containing composition are preferably such that if a consumer follows the dosing instructions provided, stock of both will have run out at the same time. Alternatively one of the compositions is supplied in excess. In the latter case, preferably instructions are provided to a consumer what composition can be used instead of the one that is not supplied or only in a limited amount.

Especially preferred kits are those wherein at least one of the oil containing composition (c) and the water containing composition (b) may be used separately as a final product. Even more preferred both composition (b) and (c) are useful products on their own.

Examples of kits according to the invention are listed below.

In one embodiment, a kit according to the invention comprises (b) a separate container comprising potable water and (c) a separate container comprising an oil phase which comprises cold hydrating viscosifying agent or citric cell wall homogenate, emulsifier composition, salt and an acidulate. The preferred emulsifier is lecithin, caseinate or a caseinate replacer or a combination of any of these emulsifiers.

In an alternative embodiment, a kit according to the present invention comprises
(b) a separate container comprising water or (reconstituted) milk
(c) a separate container comprising an oil, preferably sunflower oil or olive oil
(d) at least one tablet comprising an emulsifier composition, preferably lecithin, and said tablet preferably further comprises a cold hydrating viscosifying agent
(f) a set of usage instructions under which (part of) the contents of (b), (c) and (d) are to be mixed by a consumer. This kit is preferably composed such that one tablet in combination with an amount of (b) and (c) in accordance with the instructions provides a spreadable emulsion in an amount of from about 20 g to about 250 g.

Such kit preferably comprises a multitude of tablets, e.g. 20 to 50 tablets, which may be packed individually or provided all together in one packaging unit. This applies for all cases, also those embodiments below, where the kit comprises at least one tablet.

In an alternative embodiment a kit according to the invention comprises (a) a measuring device, (d) at least one tablet comprising an emulsifier composition, preferably lecithin, and preferably a cold hydrating viscosifying agent, at least one of (b) and (c) described in the preceding paragraph, and a set of usage instructions.
For this kit the usage instructions preferably explain to the consumer that the measuring device is for measuring the correct amount of oil containing composition and the amount of water containing composition desired to prepate the final spreadable emulsion. Preferably if this kit comprises (b) the usage instructions will instruct a consumer to add an oil containing composition, preferably olive oil or sunflower oil.
Preferably if this kit comprises (c) the usage instructions will instruct a consumer to add a water containing composition preferably water or milk.

In a further embodiment the kit is as described above, but the tablet is replaced by a powder which is preferably free flowing or by flakes. The powder may be packed in convenient dosage units or provided as one volume in one packaging unit. In the latter case the consumer is preferably instructed about the amount of powder that is to be used for preparing the final emulsion.

In an alternative embodiment a kit according to the invention comprises two separately packed pourable creams (b) and (c). Said creams are water continuous emulsions with a dispersed fat phase. The amount of fat in each cream preferably ranges from 15 to 40 wt% on total cream weight. The fat may be any fat, including dairy fat. At least one of the creams comprises an emulsifier, preferably caseinate or a caseinate replacer. Hence preferably one of the creams is a dairy cream.
Even more preferred one of the creams comprises a thickener, preferably selected from the group comprising alginate, pectin or a combination thereof whereas simultaneously the other cream comprises an agent triggering gelation of the thickener, e.g. calcium ions in the case of alginate or pectin.
Upon mixing of these creams by a consumer the thickener will gel and hence a spreadable product is provided.

In an alternative embodiment the kit comprises
(b) a separate container comprising a cream, said cream comprising an emulsifier
(c) a separate container comprising an oil or fat comprising a liquid oil, acid, salt and a cold hydrating viscosifying agent. A preferred cold hydrating viscosifying in such case is citric cell wall material.

Advantageously the cream in container (b) can be used as such as a cooking product e.g. as a cooking cream, a whipping cream or a coffee creamer. Such cream is turned into a spreadable product by the addition of a liquid oil, acid, salt and a cold hydrating viscosifying agent.

In this embodiment, the cream preferably comprises from 15 to 40 wt% fat.

Said fat preferably comprises a certain amount of hardstock fat to enable the whippability of the cream. Therefore preferably in this embodiment, at least part of the fat in the cream is characterised by a solid fat profile of more than 30% solid fat at 5 °C, more than 25% solid fat at 10 °C and more than 25% solid fat at 20 °C.
More preferred at least 50 wt%, even more preferred from 75 to 100 wt% of the total fat or fat blend shows the indicated solid fat profile.
The solid fat content can be measured by a suitable analytical method such as NMR.

Even more preferred at least 50 wt% of the total fat is solid at 10 °C. Suitable fats in this respect are for example hardened palm kernel oil, coconut fat, hardened coconut fat, (hardened) palm oil, butter fat, fats comprising C14 and/or C16 fatty acids such as laurics, (hardened) babassu oil or mixtures thereof.
Fats comprising a high content of C14 and/or C16 fatty acids are highly preferred as a source of the fat phase, as they tend to show enhanced clumping behaviour and good oral melt properties.

It will be appreciated that a suitable fat blend is preferably of such fat composition that the final product still melts at least partly when consumed.

Especially suitable is a fat blend comprising more than 50% of a partially hardened palm kernel oil, for example a palm kernel oil with a slip melting point of from 35 to 45 °C.

In a further alternative embodiment a kit comprises
(b) a container comprising water or milk
(c) a container or pouch comprising a paste, said paste comprising 60-96 wt% of a fat or fat blend, 1 - 6 wt% of protein, 2 to 25 wt% of a cold swelling starch, 1 to 6 wt% of an emulsifier (d), preferably lecithin, and optionally 0 to 10 wt% water
(f) usage instructions.

In a further alternative embodiment the kit comprises
(b) a container comprising an aqueous phase comprising caseinate or a caseinate replacer and a thickener
(c) a container comprising an oil phase comprising an acidulant, salt and a cold hydrating viscosifying agent
(f) usage instructions.

In each of the above kits the container comprising the water containing composition and the container comprising the oil containing composition may be divided in single dose compartments. Also each container may contain the oil or water containing composition packed individually for unit dosing. The latter enables reliable dosing but is less preferred due to potential environmental impact of the packaging material.

The kit according to the invention may be prepared in any suitable way.
According to one embodiment, ingredients for the oil containing composition and ingredients for the water containing composition are combined separately and each mixture is filled into a separate container. The containers are subsequently put together in one packaging unit. Optionally usage instructions are printed on the joint packaging material or added as a lose leaflet.

The invention will now be illustrated by the following nonlimiting examples.

### Examples

### General

### Determination of G'

Oscillatory shear measurements were performed using a Carrimed CSL500 Rheometer (parallel plate geometry) at a constant temperature of 5°C. (Stress of 10Pa and Frequency of 1Hz). The sample was loaded onto the rheometer immediately after mixing and values of G' were collected every 30 seconds. The value of G' quoted in Pa is that recorded at a time of 15 minutes after initial shaking.
Stevens value was determined in g by using a Stevens texture analyser (2 mm/sec, 20 mm depth, mayonnaise grid (mesh 7, thread thickness 0.8 mm, mesh width 2.83 mm,). Alternatively for harder products a cylindrical probe was used having a diameter of 7 mm with penetration depth of 10 mm.

RVA-method to determine suitable cold hydrating viscosifying agents.

### Rapid Visco-Analyser (RVA) - Biopolymer Hydration Test

A model emulsion was prepared containing:

| | |
|---|---|
| Sunflower Oil | 12.5g |
| Lecithin (Bolec MT) | 2.5g |
| "test agent" | 4.0g in case of starch, 1 g in case of a gum. |

These ingredients were mixed for 1 minute, at 25 °C, then water 11.25g (equivalent to 45 Parts in 100g formulation) was added.

This mixture was put straight into RVA machine (manufactured by Newport Scientific Pty Ltd) and mixed for 10 mins at 25°C, 180rpm.
From these data, final viscosity and rate of viscosity development (ie. the maximum gradient between the offset of viscosity increase and the plateau of final viscosity) were derived.

### Small Deformation Rheology of Instant Spreads

Product was placed on rheometer with parallel plate geometry in oscillation mode, 1mm gap, 4cm diameter.
The experiment consisted of a stress sweep from 1 up to -1000 Pa.
The parameters are as follows: frequency 1Hz, temperature 20°C.
From the plot of tan delta vs strain, the value of strain where tan delta = 1 is plotted against the initial tan delta value.

### Example 1

A fat composition was prepared by mixing lecithin in sunflower oil at room temperature, followed by the addition of the other ingredients, like the starch, and shaking this mixture in a sealed container to disperse the powders in the oil.
Ingredients are listed in table 1.

**Table 1**

| Ingredient | wt% |
|---|---|
| Sunflower oil | 86.3 |
| Sodium caseinate | 1.7 |
| Ultratex 4^{tm} ex national starch | 6.9 |
| Lecithin (Bolec MT^{tm} ex Unimills Zwijndrecht) | 1. 7 |
| NaCl | 2.1 |
| buffer | 1.1 |
| Potassium sorbate | 0.2 |

Ultratex 4^{tm} was subjected to the RVA method. Final viscosity: about 2380 cP. Rate of viscosity development: 1867 cP/minute. A pouch was filled with 250 g this fat composition. The pouch was sealed.

A 250 ml glass bottle was filled with pasteurised milk which contained 4 wt% milk fat.

The pouch and bottle were packaged in a cardboard, partly transparent box, to form the kit according to the invention. The kit further contains a set of usage instructions in writing accompanied by graphics, instructing a consumer to mix (part of) the contents of the pouch with (part of) the milk in a one to one ratio for 2 minutes by shaking in a closed container to obtain a spreadable emulsion.
When used according to the instructions, the kit provides a spreadable oil in water emulsion having a Stevens value of 207 g at 20 °C (measured with a mayonnaise grid) and a G' of 2275 Pa.

### Example 2

A tablet composition with ingredients as listed in table 2 was prepared by mixing Bolec, flavour and colour ingredients into the other, powdered, components of the recipe until a homogeneous dispersion was obtained. The mixture was compressed in a suitable die at a constant 300 psi (21 kg/sq cm) for approximately 60 seconds.

**Table 2**

| Ingredient | weight % on tablet |
|---|---|
| Ultratex 4 (starch from National Starch (ICI)) | 45.4023 |
| Tween 20 | 5.363985 |
| Sodium chloride | 21.64751 |
| Tri sodium citrate | 5.363985 |
| Citricacid anhydrous | 2.298851 |
| Potassium sorbate | 1.724138 |
| guar | 18.19924 |

In a container 5 tablets were packed. Each tablet weighed about 5.5 g.

A 250 glass bottle was filled with water and closed.

A 250 glass bottle was filled with sunflower oil and closed.

The container with tablets and the bottles with oil and water were packed together in a carton box. The box provided instructions for a consumer to put one tablet in a bowl and subsequently ad 50 g of water and 50 g of oil. This mixture upon stirring for several minutes resulted in a spreadable emulsion.

### Example 3

A tablet composition with ingredients as listed in table 3 was prepared by mixing Bolec, flavour and colour ingredients into the other, powdered, components of the recipe until a homogeneous dispersion was obtained. The mixture was compressed in a suitable die at a constant 300 psi for approximately 60 seconds.

**Table 3**

| Ingredient | weight % on tablet |
|---|---|
| Ultratex 4 (starch from National Starch (ICI)) | 59.25926 |
| caseinate | 9.25926 |
| Sodium chloride | 17.77778 |
| Tri sodium citrate | 4.444445 |
| Citricacid anhydrous | 1.851852 |
| Potassium sorbate | 1.481482 |
| Bolec MT (lecithin) from Unimills, Zwijndrecht | 5.925926 |

In a container 5 tablets were packed. Each tablet weighed about 6 g.

A 250 glass bottle was filled with sunflower oil and closed.

The measuring device with tablets and the bottle with oil were packed together in a carton box. The box provided instructions for a consumer to put one tablet in the measuring device and subsequently ad 50 g of tap water (until indicated mark on measuring device) and 50 g of the provided oil (mark indicated on measuring device). This mixture upon stirring for several minutes resulted in a spreadable emulsion.

### Example 4

A sunflower oil was mixed with hydrolysed lecithin (Bolec M/T, Unimills Zwijndrecht) such that the amount of lecithin was 2 wt% on oil.
This oil was filled into a 250 ml bottle.

A composition was prepared comprising:

**Table 4**

| Ingredient | weight % on powder |
|---|---|
| Ultratex 4^{tm} (starch from National Starch (ICI)) | 42.0715 |
| caseinate | 12.9449 |
| Sodium chloride | 15.5339 |
| Tri sodium citrate | 3.8835 |
| Citricacid anhydrous | 1.6181 |
| Potassium sorbate | 1.2945 |
| guar | 9.7087 |
| Sunflower oil | 12.9449 |

50 g of this composition (C) was filled into a container and closed.

The container with the composition (C) and the bottle with oil were packed into one carboard box. A set of usage instructions was provided on the box instructing a consumer to mix 7.5 g of the composition (c) with 50 g of the oil and 50 g of potable water by stirring. When used according to the instructions, a spreadable oil in water emulsion with a Stevens value of about 88 g at 5 °C was obtained.

### Example 5

A sunflower oil was filled into a 250 ml bottle.

A composition was prepared comprising:

**Table 5**

| Ingredient | weight % on powder |
|---|---|
| Bolec M/T^{tm} | 2 |
| Ultratex 4^{tm} (starch from National Starch (ICI)) | 42.0710 |
| caseinate | 12.9450 |
| Sodium chloride | 15.5340 |
| Tri sodium citrate | 3.8835 |
| Citricacid anhydrous | 1.6181 |
| Potassium sorbate | 1.2945 |
| guar | 9.7087 |
| Sunflower oil | 10.9452 |

50 g of this composition (C) was filled into a container and closed.

The container with the composition (C) and the bottle with oil were packed into one carboard box. A set of usage instructions was provided on the box instructing a consumer to mix 7.5 g of the composition (c) with 50 g of the oil and 50 g of potable water by stirring. When used according to the instructions, a spreadable oil in water emulsion with a Stevens value of about 88 g at 5 °C was obtained.

## Claims

1. A kit for the instant preparation of a spreadable water and oil comprising emulsion said kit comprising at least two items selected from
(a) a measuring device,
(b) a water containing composition
(c) an oil containing composition
wherein item (b) and (c) are provided in separate packaging units and wherein the kit further comprises an emulsifier composition (d) and preferably a cold hydrating viscosifying agent (e).

2. A kit according to claim 1, comprising item (b) and item (c).

3. A kit according to claim 1 or 2 wherein the packaging unit for the water containing composition is a rigid container.

4. A kit according to any of claims 1-3 wherein the packaging unit for the oil containing composition is a flexible pouch or a rigid container.

5. A kit according to claim 3 wherein the container is a measuring device.

6. A kit according to any of claims 1-5 further comprising usage instructions.

7. A kit according to any of claims 1-6 wherein (b) and (c) may be used separately as a final product.

8. A kit according to any of claims 1-7 wherein the water containing composition is an aqueous phase comprising caseinate or a caseinate replacer.

9. A kit according to any of claims 1-8 wherein the oil containing composition is an oil phase comprising a cold hydrating viscosifying agent.

10. A kit for the instant preparation of a spreadable water and oil comprising emulsion, said kit comprising
(b) a separate container comprising water
(c) a separate container comprising an oil,
(d) at least one tablet comprising an emulsifier composition, preferably lecithin,
(f) a set of usage instructions under which (part of) the contents of (b), (c) and (d) are to be mixed by a consumer.

11. A kit for the instant preparation of a spreadable water and oil comprising emulsion, said kit comprising
(b) a separate container comprising a cream, said cream comprising an emulsifier
(c) a separate container comprising an oil or fat comprising a liquid oil, acid, salt and a cold hydrating viscosifying agent.

12. A kit for the instant preparation of a spreadable water and oil comprising emulsion, said kit comprising
(b) a container comprising an aqueous phase comprising caseinate or a caseinate replacer and a thickener and
(c) a container comprising an oil phase comprising an acidulant, salt and a cold hydrating viscosifying agent and
(f) usage instructions.

## Patentansprüche

1. Kit für die Instant-Herstellung einer streichfähigen Wasser und Öl umfassenden Emulsion, wobei der Kit wenigstens zwei Bestandteile umfasst, die ausgewählt sind aus:
(a) einer Messvorrichtung,
(b) einer Wasser enthaltenden Zusammensetzung,
(c) einer Öl enthaltenden Zusammensetzung,
wobei die Bestandteile (b) und (c) in getrennten Verpackungseinheiten bereitgestellt werden und wobei der Kit außerdem eine Emulgatorzusammensetzung (d) und vorzugsweise ein kalt hydratisierendes Verdickungsmittel (e) umfasst.

2. Kit nach Anspruch 1, umfassend Bestandteil (b) und Bestandteil (c).

3. Kit nach Anspruch 1 oder 2, wobei die Verpackungseinheit für die Wasser enthaltende Zusammensetzung ein starrer Behälter ist.

4. Kit nach einem der Ansprüche 1 bis 3, wobei die Verpackungseinheit für die Öl enthaltende Zusammensetzung ein flexibler Beutel oder ein starrer Behälter ist.

5. Kit nach Anspruch 3, wobei der Behälter eine Messvorrichtung ist.

6. Kit nach einem der Ansprüche 1 bis 5, der außerdem Verwendungs-Instruktionen umfasst.

7. Kit nach einem der Ansprüche 1 bis 6, wobei (b) und (c) getrennt als Endprodukt verwendet werden können.

8. Kit nach einem der Ansprüche 1 bis 7, wobei die Wasser enthaltende Zusammensetzung eine wässrige Phase ist, die Caseinat oder einen Caseinat-Ersatzstoff umfasst.

9. Kit nach einem der Ansprüche 1 bis 8, wobei die Öl enthaltende Zusammensetzung eine Ölphase ist, die ein kalt hydratisierendes Verdickungsmittel umfasst.

10. Kit für die Instant-Herstellung einer streichfähigen Wasser und Öl umfassenden Emulsion, wobei der Kit umfasst:
(b) einen getrennten Behälter, der Wasser umfasst,
(c) einen getrennten Behälter, der ein Öl umfasst,
(d) wenigstens eine Tablette, die eine Emulgatorzusammensetzung, vorzugsweise Lecithin, umfasst,
(f) einen Satz Verwendungs-Instruktionen, nach denen die (ein Teil der) Gehalte von (b), (c) und (d) vom Konsumenten zu vermischen sind.

11. Kit für die Instant-Herstellung einer streichfähigen Wasser und Öl umfassenden Emulsion, wobei der Kit umfasst:
(b) einen getrennten Behälter, der eine Creme bzw. Sahne umfasst, wobei die Creme bzw. Sahne einen Emulgator umfasst,
(c) einen getrennten Behälter, der ein Öl oder ein Fett, das ein flüssiges Öl umfasst, Säure, Salz und ein kalt hydratisierendes Verdickungsmittel umfasst.

12. Kit für die Instant-Herstellung einer streichfähigen Wasser und Öl umfassenden Emulsion, wobei der Kit umfasst:
(b) einen Behälter, der eine wässrige Phase umfasst, die Caseinat oder einen Caseinat-Ersatzstoff und ein Verdickungsmittel umfasst, und
(c) einen Behälter, der eine Ölphase umfasst, die ein Säuerungsmittel, Salz und ein kalt hydratisierendes Verdickungsmittel umfasst, und
(f) Verwendungs-Instruktionen.

## Revendications

1. Trousse pour la préparation instantanée d'une émulsion comprenant de l'eau et de l'huile qui peut être étalée, ladite trousse comprenant au moins deux articles choisis parmi :
(a) un dispositif de mesure,
(b) une composition contenant de l'eau
(c) une composition contenant de l'huile
dans laquelle l'article (b) et l'article (c) sont mis à disposition dans des unités d'emballage séparées et la trousse comprend en outre une composition d'émulsifiant (d) et de préférence un agent de viscosité par hydratation à froid (e).

2. Trousse selon la revendication 1, comprenant l'article (b) et l'article (c).

3. Trousse selon la revendication 1 ou 2, dans laquelle l'unité d'emballage pour la composition contenant de l'eau est un récipient rigide.

4. Trousse selon l'une quelconque des revendications 1 à 3, dans laquelle l'unité d'emballage pour la composition contenant de l'huile est un sachet flexible ou un récipient rigide.

5. Trousse selon la revendication 3, dans laquelle le récipient est un dispositif de mesure.

6. Trousse selon l'une quelconque des revendications 1 à 5 comprenant en outre des instructions d'utilisation.

7. Trousse selon l'une quelconque des revendications 1 à 6, dans laquelle (b) et (c) peuvent être utilisées séparément en tant que produit final.

8. Trousse selon l'une quelconque des revendications 1 à 7, dans laquelle la composition contenant de l'eau est une phase aqueuse comprenant du caséinate ou un remplaçant du caséinate.

9. Trousse selon l'une quelconque des revendications 1 à 8, dans laquelle la composition contenant de l'huile est une phase huileuse comprenant un agent de viscosité par hydratation à froid.

10. Trousse pour la préparation instantanée d'une émulsion comprenant de l'eau et de l'huile qui peut être étalée, ladite trousse comprenant
(b) un récipient séparé comprenant de l'eau
(c) un récipient séparé comprenant de l'huile,
(d) au moins une pastille comprenant une composition d'émulsifiant, de préférence la lécithine
(f) un ensemble d'instructions d'utilisation selon lequel (une partie des) les contenus de (b), (c) et (d) doivent être mélangés par un consommateur.

11. Trousse pour la préparation instantanée d'une émulsion comprenant de l'eau et de l'huile qui peut être étalée, ladite trousse comprenant
(b) un récipient séparé comprenant une crème, ladite crème comprenant un émulsifiant
(c) un récipient séparé comprenant de l'huile ou une matière grasse comprenant une huile liquide, un acide, un sel et un agent de viscosité par hydratation à froid.

12. Trousse pour la préparation instantanée d'une émulsion comprenant de l'eau et de l'huile qui peut être étalée, ladite trousse comprenant
(b) un récipient comprenant une phase aqueuse comprenant du caséinate ou un remplaçant du caséinate et un épaississant et
(c) un récipient comprenant une phase huileuse comprenant un acidulant, un sel et un agent de viscosité par hydratation à froid et
(f) des instructions d'utilisation.
